(19) Europäisches Patentamt
European Patent Office
Office européen des brevets

(11) Veröffentlichungsnummer: **0 235 537 B1**

(12) **EUROPÄISCHE PATENTSCHRIFT**

(45) Veröffentlichungstag der Patentschrift: **07.04.93**

(51) Int. Cl.$^5$: **C08K 5/14**, C08L 83/04, C08J 3/24

(21) Anmeldenummer: **87100844.7**

(22) Anmeldetag: **22.01.87**

Die Akte enthält technische Angaben, die nach dem Eingang der Anmeldung eingereicht wurden und die nicht in dieser Patentschrift enthalten sind.

(54) **Verfahren zur Vernetzung von Organopolysiloxanen.**

(30) Priorität: **10.02.86 DE 3604174**
**07.10.86 DE 3634171**

(43) Veröffentlichungstag der Anmeldung:
**09.09.87 Patentblatt 87/37**

(45) Bekanntmachung des Hinweises auf die Patenterteilung:
**07.04.93 Patentblatt 93/14**

(84) Benannte Vertragsstaaten:
**AT BE CH DE ES FR GB IT LI NL SE**

(56) Entgegenhaltungen:
**BE-A- 544 140**
**DE-C- 918 898**
**DE-C- 959 946**
**FR-A- 1 113 032**
**FR-A- 2 390 461**

**"Grundlagen der organischen Chemie", H.R. Christen, S.646, Otto Salle Verlag (1977)**

(73) Patentinhaber: **Peroxid-Chemie GmbH**
**Dr.-Gustav-Adolf-Strasse 3**
**W-8023 Höllriegelskreuth(DE)**

(72) Erfinder: **Dorn, Maximilian, Dr.**
**Gistlstrasse 100a**
**W-8023 Pullach(DE)**
Erfinder: **Rossberger, Erwin, Dr.**
**Jettenhausnerstrasse 2**
**W-8021 Grossdingharting(DE)**
Erfinder: **Weinmaier, Josef, Dr.**
**Wolfrathshauserstrasse 76**
**W-8023 Pullach(DE)**
Erfinder: **Hägel, Eberhard, Dr.**
**Eichdorffweg 26a**
**W-8021 Icking(DE)**

(74) Vertreter: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86 (DE)**

**EP 0 235 537 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und die Verwendung eines Mittels zum Vernetzen von Organopolysiloxanen.

Organopolysiloxane können je nach Polymerisationsgrad entweder in Form von Ölen oder als plastische Feststoffmassen in Form von Silikonkautschuk aus Siloxanketten mit Alkyl- oder Arylsubstituenten R wie Methyl, Phenyl, Vinyl am Siliziumatom gemäß nachstehender Strukturformel aufgebaut sein.

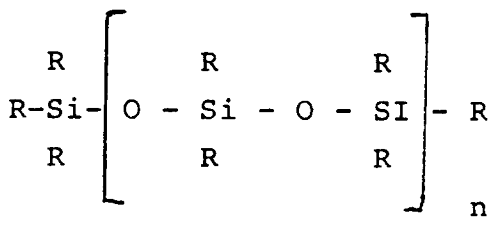

Die H-Atome können bei den Alkylsubstituenten ganz oder teilweise auch durch Fluor oder Chlor ersetzt sein, um spezielle chemische Eigenschaften zu erzielen. In der Regel enthält Silikonkautschuk 1 bis 10 Vinylgruppen pro 1000 Si-Atome.

Diese Silikonkautschuke werden gelegentlich mit Pigmenten oder Füllstoffen versehen, um Farbe und Festigkeit zu beeinflussen. Meist will man aber Silikonprodukte mit hoher Transparenz ohne Verunreinigungen und Verfärbungen erhalten, was insbesondere in medizinischen und in lebensmittelbezogenen Anwendungen bei Schläuchen, Dichtungen, Profilen, Folien usw. der Fall ist.

Für die Herstellung dieser Produkte wendet man meistens kontinuierlich Verfahren an und vulkanisiert insbesondere im IR-Heißkanal bei 150 bis 600 °C drucklos in Gegenwart von Luft.

Für diese Anwendung haben sich bisher industriell chlorierte Bisbenzoylperoxide wie das Bis-(2,4-dichlorbenzoyl)-peroxid als Vernetzungsmittel bewährt. Diese Verbindung läßt jedoch bedenkliche Zerfallsprodukte entstehen, zu denen polychlorierte Biphenyle (PCB) gehören sollen. Andere Peroxide, z. B. Dicumylperoxid, können nicht zur Anwendung kommen, da sie zu Blasen im Vulkanisat, Verfärbungen des gewünschten transparenten Artikels oder auch zu einer drastischen Verminderung der Produktivität durch zu langsamen Zerfall führen.

Nach der Vulkanisation werden normalerweise die Silikonkautschukprodukte durch eine Behandlung mit Heißluft von 150 bis 250 °C über mehrere Stunden von flüchtigen Produkten aus dem Siloxanherstellungsverfahren und des Peroxidzerfalls befreit. Außerdem werden erst nach dieser Behandlung die optimalen mechanischen Eigenschaften (Zugfestigkeit, E-Modul, Härte, Druckverformungsrest etc.) erreicht.

Bei diesem Tempern darf sich der Silikonartikel jedoch nicht verfärben.

Aufgrund der verschärften Behördenauflagen bei der Verwendung chlorierter Aromaten besteht ein dringender Bedarf nach einem Ersatz für Bis-(2,4-dichlorbenzoyl)-peroxid, bei dessen Anwendung die chlorierten Zerfallsprodukte des letzteren wie z. B. 2,4-Dichlorbenzoesäure und insbesondere 2,4-Dichlorbenzol und Bis-(2,4-dichlorphenyl) nicht entstehen können (Rubber World, August 1985, S. 12 ff).

Aufgabe der Erfindung ist es daher, ein geeignetes organisches chlorfreies Peroxid für die insbesondere drucklose Vulkanisation von Silikonkautschuk zu finden, welches die Nachteile der chlorierten Peroxide nicht aufweist.

Benzoylperoxid selbst ist ungeeignet, da es blasige Vulkanisate bei Nichtanwendung von Druck erzeugt.

Ferner sollte das gesuchte Peroxid noch folgende Bedingungen erfüllen:

- bis +30 °C mehrere Monate (bevorzugt 3 bis 6) lagerstabil sein,
- in Silikonöl in einer Konzentration von 10 bis 80 % abmischbar sein,
- Zersetzungsprodukte ergeben, die sich durch mehrstündiges Tempern mit Heißluft von 150 bis 250 °C entfernen lassen, ohne daß eine Verfärbung des Vulkanisats eintritt,
- in Silikonpastenform während der Lagerung seine Farbe weiß nicht verlieren, da sonst auch das Vulkanisat verfärbt wird,
- eine Selbstzersetzungstemperatur aufweisen, die so hoch liegt, daß die gesetzlichen Vorschriften nicht eine Lagerung und Transport unter Kühlung notwendig machen.

Gelöst wird diese Aufgabe erfindungsgemäß durch ein Verfahren zur Vernetzung von Organopolysiloxanen mittels Bis-Benzoylperoxidderivaten unter Erhitzen, welches dadurch gekennzeichnet ist, daß man als Bis-Benzoylperoxidderivat wenigstens eine Verbindung der allgemeinen Formel I verwendet

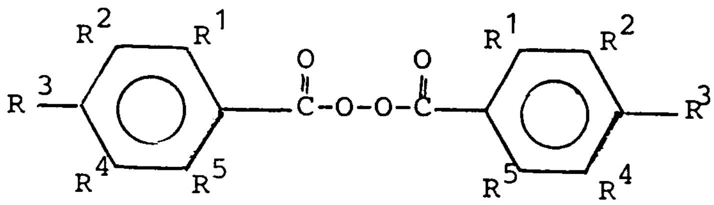

(I)

worin die Reste $R^1$, $R^2$, $R^3$, $R^4$ und $R^5$ jeweils unabhängig voneinander die folgende Bedeutung haben:
$R^1$ und $R^5$ können gleich oder verschieden sein und bedeuten Alkoxycarbonyl mit 2 bis 4 C-Atomen in der Alkylgruppe, F oder H;
$R^2$ und $R^4$ können gleich oder verschieden sein und bedeuten eine Alkylgruppe mit 2 bis 8 C-Atomen oder H, $R^3$ bedeutet eine Alkylgruppe mit 1 bis 8 C-Atomen oder H, wobei mindestens 2 Reste und höchstens 4 Reste pro Benzolring H bedeuten und drucklos bei einer Temperatur zwischen 100 und 600 °C in Gegenwart von Sauerstoff, insbesondere von Luft, vernetzt.
Die Alkylgruppe kann geradkettig, verzweigt oder cyclisch sein.

Überraschenderweise hat sich gezeigt, daß mit den oben bezeichneten Peroxiden alle vorstehend angegebenen Bedingungen erfüllt werden können, obwohl in Orthostellung alkylsubstituierte Bis-Benzoylperoxide wie Bis-(2-methylbenzoyl)-peroxid ungenügende Lagerstabilität aufweisen und verfärbte Vulkanisate liefern.

Das erfindungsgemäße Verfahren eignet sich für die drucklose Vernetzung. Diese kann erfindungsgemäß bei einer Temperatur zwischen etwa 100 und etwa 600 °C durchgeführt werden und zwar zweckmäßig in Gegenwart von Sauerstoff, insbesondere von Luft. Vorzugsweise erfolgt die Vernetzung bei einer Temperatur zwischen 150 und 350 °C, beispielsweise durch Heißluft.

Die Verbindungen der allgemeinen Formel gemäß Erfindung, in denen $R^1$ und $R^5$ jeweils Wasserstoff bedeuten, lassen sich beispielsweise durch Umsetzung der entsprechenden Säurechloride mit $H_2O_2$ in alkalischem Medium herstellen.

Sie sind teilweise bekannt und werden vorzugsweise in Silikonöl dispergiert angewendet und so dem zu vernetzenden Organopolysiloxan zugemischt, da hierbei eine besonders gute und gleichmäßige Verteilung des Peroxids in dem zu vernetzenden Siloxan erzielt wird. Um diesen Effekt zu unterstützen, wird das Peroxid vorzugsweise in einer Teilchengröße unter 50 $\mu$m dispergiert, besonders bevorzugt in einer Teilchengröße von 1 bis 20 $\mu$m, eingesetzt.

Die Herstellung der Silikonöldispersionen der erfindungsgemäß verwendeten Verbindungen der allgemeinen Formel I, worin $R^1$ und $R^5$ jeweils H bedeuten, kann wie in den DE-Patentschriften 12 56 644 und 17 68 199 beschrieben, erfolgen, indem das fertige Peroxid mit dem Silikonöl in Wasser dispergiert wird und das dabei gebildete Produkt, das als Pulver bzw. Granulat vorliegt, abgetrennt wird oder, indem man das entsprechende Benzoylchlorid mit $H_2O_2$ in alkalischem Medium in Gegenwart des Silikonöls herstellt und die so gebildete Dispersion vom Wasser befreit.

Die Verbindungen der allgemeinen Formel I gemäß der Erfindung, in denen $R^1$ und/oder $R^5$ eine Carboxyalkylgruppe bedeuten, lassen sich beispielsweise durch Umsetzung des entsprechenden Phthalsäurealkylesterchlorids mit Wasserstoffperoxid in alkalischem Medium herstellen. Nach Trocknen und Umkristallisieren können diese Verbindungen dann bevorzugt mit Siliconöl vermischt und homogenisiert werden und in dieser Form dann zur Vernetzung eingesetzt werden.

In den bevorzugten Silikonöldispersionen kann das erfindungsgemäß verwendete Peroxid in einer Menge zwischen 10 und 80 Gew.-% vorliegen.

Bevorzugt wird als Peroxid der allgemeinen Formel I eine Verbindung eingesetzt, bei der die Substituenten $R^1$ und $R^5$ H bedeuten, $R^2$ und/oder $R^4$ jeweils eine Alkylgruppe mit 2 bis 4 C-Atomen bedeuten und/oder bei der die Substituenten $R^3$ eine Alkylgruppe mit 1 bis 4 C-Atomen bedeuten. Besonders bevorzugt wird eine Verbindung der allgemeinen Formel I verwendet, bei der $R^1$, $R^2$, $R^4$ und $R^5$ H bedeuten und $R^3$ eine Methyl-, Ethyl-, Propyl-, Butylgruppe und/oder deren Isomere bedeuten. Insbesondere bevorzugt wird Bis-(4-methylbenzoyl)-peroxid oder/und Bis-(4-tert.-Butyl-benzoyl)-peroxid verwendet.

Die jeweils geeignete Menge an Peroxid läßt sich durch wenige einfache Vorversuche leicht herausfinden. Im allgemeinen setzt man 0,5 bis 5 mmol Verbindung der allgemeinen Formel I je 100 g zu vernetzendem Organopolysiloxan zu.

Der Silikonkautschuk weist nach Vulkanisation und Temperung hohe Alterungsbeständigkeit, Transparenz und gute mechanische Festigkeit auf. Die Zugfestigkeit ist in erster Linie vom Kautschuktyp abhängig. Hohe Zugfestigkeit resultiert aber auch aus gleichmäßiger Einmischung des Peroxids. Bei hohen Vernetzungsgraden tritt vorzeitiger Bruch auf, so daß niedrige Zugfestigkeitswerte resultieren (Versprödung).

Ein hoher Vernetzungsgrad zeigt sich in der Höhe des Drehmomentanstiegs bei der Rheometerprüfung sowie im Modul ($N/mm^2$) z. B. bei 400%. Der Vernetzungsgrad hängt vom Peroxid-Typ und der nach Aktivsauerstoff bzw. molar dosierten Peroxidmenge ab. Um Peroxide nach Wirkung zu vergleichen, muß molar dosiert werden.

Ein weiterer Gegenstand der Erfindung ist die Verwendüng eines Mittel zur Durchführung des Verfahrens, welches dadurch gekennzeichnet ist, daß das Mittel im wesentlichen aus Silikonöl, in dem 10 bis 80 Gew.-% an wenigstens einer Verbindung der allgemeinen Formel I

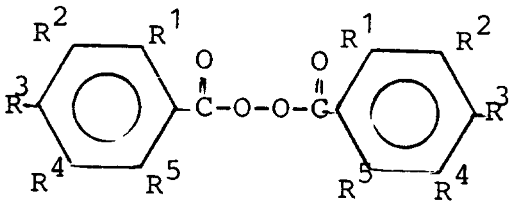

(I)

worin die Reste $R^1$, $R^2$, $R^3$, $R^4$ und $R^5$ jeweils unabhängig voneinander die folgende Bedeutung haben: $R^1$ und $R^5$ können gleich oder verschieden sein und bedeuten Alkoxycarbonyl mit 2 bis 4 C-Atomen in der Alkylgruppe, F oder H; $R^2$ und $R^4$ können gleich oder verschieden sein und bedeuten eine Alkylgruppe mit 2 bis 8 C-Atomen oder H, $R^3$ bedeutet eine Alkylgruppe mit 1 bis 8 C-Atomen oder H, wobei mindestens 2 Reste und höchstens 4 Reste pro Benzolring H bedeuten, in feinteiliger Form enthalten sind, besteht.

Durch die Erfindung läßt sich eine ausgezeichnete Vernetzung von Organopolysiloxanen ohne Vergilbung und ohne die Bildung unerwünschter Zerfallsprodukte erreichen und auch bei druckfreiem Arbeiten tritt keine Blasenbildung auf.

Die folgenden Beispiele erläutern die Erfindung weiter.

**Beispiel 1**

p-Methylbenzoylperoxid-Siliconpaste

Zu einer Mischung aus 1000 g Wasserstoffperoxid (Gehalt: 35 %; 10,3 Mol), 2360 g Natronlauge (Gehalt: 25 %, 14,8 Mol), 10 kg Wasser, 620 g Siliconöl und 7 ml Netzmittel werden unter Kühlung und starkem Rühren 2000 g p-Methylbenzoylchlorid (12,9 Mol) gegeben. Die Zugabezeit beträgt 30 Minuten, die Temperatur 10 bis 20 °C. Nach halbstündigem Nachrühren wird das Reaktionsprodukt mehrfach gewaschen und mit weiteren 1080 g Siliconöl versetzt. Das pastöse Produkt wird anschließend getrocknet.

| | |
|---|---|
| Ausbeute: | 3400 g |
| Peroxid-Gehalt: | 49,0 % |

Bezogen auf die eingesetzte Säurechloridmenge entspricht diese Menge einer Ausbeute von 95 %.

**Beispiel 2**

p-tert.-Butylbenzoylperoxid-Siliconpaste

Zu einem Gemisch aus 666 g Wasserstoffperoxid (Gehalt: 35 %, 6,9 Mol), 1572 g Natronlauge (Gehalt: 25 %, 9,8 Mol), 3 kg Wasser, 480 g Siliconöl und 5 ml Netzmittel werden unter Kühlung und starkem Rühren 1500 g p-tert. Butylbenzoylchlorid (7,6 Mol) innerhalb von 20 Minuten gegeben. Die Reaktionstemperatur beträgt 10 bis 15 °C; bei dieser Temperatur werden noch weitere 30 Minuten nachgerührt. Nach mehrmaligen Waschen werden weitere 770 g Siliconöl zugegeben. Das erhaltene Produkt wird anschließend getrocknet.

| | |
|---|---|
| Ausbeute: | 2550 g |
| Peroxid-Gehalt: | 50,7 % |

Bezogen auf die eingesetzte Säurechloridmenge entspricht dies einer Ausbeute von 96 %.

**Beispiel 3**

Bis(-o-carboethoxy-)benzoylperoxid - Siliconpaste

Zu einer auf 0 bis 5°C gekühlten Lösung von 3060 g 10%iger Natronlauge (7,7 mol) und 138 g 70%igem Wasserstoffperoxid wird unter starkem Rühren eine Lauge von 1063 g Phthalsäureethylesterchlorid (5,0 mol) und 90 g Benzin (30/85) gegeben. Die Zugabezeit beträgt 1,5 Std., wobei die Temperatur der Reaktionsmischung 5°C nicht überschreiten soll. Bei dieser Temperatur wird nach Zugabeende eine weitere halbe Stunde nachgerührt. Der entstandene Niederschlag wird abfiltriert, säurefrei gewaschen und getrocknet. Nach dem Umkristallisieren, aus möglichst wenig Ethanol (bis 40°C), wird Bis(-o-carboethoxy-)benzoylperoxid als farbloser Feststoff erhalten, dessen Masse nach dem Trocknen 690 g beträgt. Sein jodometrisch bestimmter Peroxidgehalt beträgt 100 %, was auf die eingesetzte Säurechloridmenge bezogen einer Ausbeute von 78 % entspricht. Die gesamte Peroxidmenge wird mit 630 g Siliconöl vermischt und auf einem Walzenstuhl homogenisiert.

Endprodukt: farblose, homogene Siliconpaste mit einem Peroxidgehalt von 52,0 %.

**Beispiel 4**

Bis(-o-carbo-n-butoxy-)benzoylperoxid - Siliconpaste

| Eingesetzte Mengen: | | |
|---|---|---|
| Phthalsäure-n-butylesterchlorid | 2000 g | = 8,3 mol |
| Natronlauge, 10 % | 6647 g | = 16,6 mol |
| Wasserstoffperoxid 70 % | 242 g | = 5,0 mol |
| Benzin (30/85) | 188 g | |

Durchführung analog Beispiel 1

Ausbeute: 1395 Bis(-o-carbo-n-butoxy-)benzoylperoxid mit einem jodometrisch bestimmten Gehalt von 100 %, farblos

Nach dem Mischen mit 1375 g Siliconöl und anschließendem Homogenisieren auf dem Walzenstuhl wird eine farblose, homogene Siliconpaste mit einem Gehalt von 50,4 % erhalten.

**Beispiel 5**

In der folgenden Tabelle 1 werden die Eigenschaften von Pasten von Peroxiden in Silikonöl verglichen. In dieser Tabelle bedeuten:

Peroxid

| | | |
|---|---|---|
| I | Vergleich | Di-2-methoxybenzoylperoxid |
| II | " | Di-2-methylbenzoylperoxid |
| III | erfindungsgemäß | Di-4-methylbenzoylperoxid (Beispiel 1) |
| IV | " | Di-4-butylbenzoylperoxid (Beispiel 2) |
| V | Vergleich | Di-benzoylperoxid |
| VI | " | Di-2,4-dichlorbenzoylperoxid |
| VII | erfindungsgemäß | Di-2-ethoxycarbonylbenzoylperoxid (Beispiel 3) |
| VIII | " | Di-2-n-butoxycarbonylbenzoylperoxid (Beispiel 4) |
| IX | " | Di-2-fluorobenzoylperoxid |

Test

A) Grind-o-meter *
B) Lagerbeständigkeit bei 30 ° C/Peroxidgehalt nach 10 Wochen
C) Verfärbung bei Lagerung 10 Wochen/30 ° C
D) Lagerbeständigkeit einer Abmischung von 2 mmol Peroxid in 100 g Silikonkautschuk
   1. Viskosität nach 10 Wochen/23 ° C
   2. Verfärbung nach 10 Wochen/23 ° C

* die mit dem Grind-o-meter gemessenen Teilchengrößen beziehen sich auf Agglomerate miteinander verklebter Teilchen. Die Größe der Einzelteilchen wird unter dem Mikroskop zu 1 bis 20 µm ermittelt.

E) Selbstzersetzungstemperatur SADT

Tabelle 1

| Peroxid | Peroxidgehalt % | M.W. g | Peroxidmenge g | Test A | Test B Abnahme | Test C | Test D 1 | Test D 2 | Test E °C |
|---|---|---|---|---|---|---|---|---|---|
| I | 40,4 | 302,0 | 1,4 | 40-50 | Zersetzung | gelb | steigt | gelb | 25 |
| II | 50,9 | 270,3 | 1,05 | 40-50 | abnehmend | gelb | steigt | gelb | 40 |
| III * | 49,7 | 270,2 | 1,09 | 40-50 | konstant | weiß | const. | weiß | 80 |
| IV * | 49,7 | 354,4 | 1,36 | 30-40 | " | weiß | " | weiß | 80 |
| V | 50,0 | 242,2 | 1,0 | 20-30 | " | weiß | " | weiß | 70 |
| VI | 50,0 | 380,0 | 1,5 | 10 | " | weiß | " | weiß | 60 |
| VII * | 52,0 | 368,4 | 1,4 | 30-40 | " | " | " | " | 50 |
| VIII * | 50,0 | 442,5 | 1,65 | 30-40 | " | " | " | " | 50 |
| IX * | 53,1 | 268,3 | 1,0 | 30-40 | " | " | " | " | 50 |

* erfindungsgemäß

**Beispiel 6**

Drucklose Vulkanisation von Silikonkautschuk (vinylgruppenhaltiges Polysiloxan von Fa. WACKER) R 401/60 U mit 2 mmol Peroxid (100 g Silikonkautschuk) bei 230 °C/15 Minuten mit Heißluft. Die Peroxide werden im Walzenstuhl eingemischt. Das Walzenfell wird blasenfrei gewälzt und in der Presse zu einer Platte vorgeformt. Nach der Vulkanisation wird noch 3 Stunden bei 230 °C mit Heißluft getempert. Die Vulkanisate werden auf Blasenfreiheit und Verfärbung geprüft. Die Ergebnisse zeigt Tabelle 2.

Tabelle 2

| Peroxidpaste Typ | Gehalt Gew.-% Peroxid | Menge 2 mmol/g | Blasenfreiheit | Verfärbung |
|---|---|---|---|---|
| I | 40,4 | 1,40 | blasig | gelbbraun |
| II | 50,9 | 1,05 | + | gelb |
| III * | 49,7 | 1,09 | + | + |
| IV * | 49,7 | 1,36 | + | + |
| V | 50,0 | 1,0 | blasig | + |
| VI | 50,0 | 1,5 | + | + |
| VII * | 52,0 | 1,40 | + | + |
| VIII* | 50,0 | 1,65 | + | + |
| IX * | 53,1 | 1,0 | + | + |
| + = gut | | | | |

* = erfindungsgemäß

Die Zerfallsprodukte ließen sich bei allen Vulkanisaten nicht mehr feststellen (Geruch, Klebrigkeit und Ausblühen).

**Beispiel 7**

Vulkanisation von Silikonkautschuk unter Druck: je 2 mmol (bzw. 1,35 mmol) entsprechende Peroxidmenge wird bei Raumtemperatur mit Hilfe eines Walzenstuhls in Silikonkautschuk R 401/60 I von Fa. WACKER eingemischt. Anschließend wird die Peroxidaktivität und Wirksamkeit im Monsanto-Rheometer 100S geprüft und dann bei 130 °C vulkanisiert. Die erhaltenen Platten von ca. 2 mm Stärke werden bei 230 °C drei Stunden getempert. An diesen Platten werden die mechanischen Eigenschaften

A) Zugfestigkeit N/mm$^2$
B) 400 % Modul N/mm$^2$
C) Dehnung %
D) Härte °Shore A
E) Druckverformungsrest 22 h/175 °C
F) Rückprall %

gemessen.

Mit dem Monsanto-Rheometer 100S erhält man, gemessen bei 110 °C
Scorchzeit $t_s$ (min.)
Vernetzungszeit $t_{90}$ (min.)
Anstieg des Drehmoments M (Nm)

Die Ergebnisse sind in Tabelle 3 wiedergegeben.

Tabelle 3

| Peroxid-Typ | Aktivsauerstoffgehalt % | Dosis Gew.-% | Monsanto Rheometer 100S | | | Zugprüfung | | | Härte °Shore A | Druckverformungsrest % | Rückprall % |
|---|---|---|---|---|---|---|---|---|---|---|---|
| | | | ts Min. | $t_{90}$ Min. | M Nm | Dehnung % | Modul N/mm² | Zugfestigkeit N/mm² | | | |
| I | 2,2 | 1,40 | 0,7 | 1,5 | 1,6 | 1110 | 2,2 | 11,4 | 36 | 100 | 31 |
| II | 3,0 | 1,05 | 1,2 | 6,5 | 3,1 | 720 | 4,5 | 10,5 | 46 | 61 | 41 |
| III* | 2,9 | 1,09 | 1,9 | 9,0 | 3,4 | 380 | 6,4 | 6,4 | 47 | 36 | 41 |
| IV* | 2,3 | 1,36 | 2,6 | 9,3 | 3,9 | 470 | 7,0 | 8,6 | 48 | 48 | 42 |
| V | 3,1 | 1,05 | 2,2 | 9,0 | 3,9 | 560 | 7,8 | 11,0 | 51 | 17 | 45 |
| VI | 2,1 | 1,5 | 0,6 | 1,9 | 3,7 | 590 | 6,3 | 10,7 | 48 | 52 | 43 |
| II | 3,0 | 0,70 | 1,7 | 7,1 | 2,5 | 880 | 3,1 | 12,0 | | | |
| III* | 2,9 | 0,73 | 2,3 | 12 | 2,9 | 640 | 4,5 | 9,1 | | | |
| IV* | 2,3 | 0,91 | 3,0 | 11 | 3,6 | 610 | 5,1 | 11,1 | | | |
| VI | 2,1 | 1,0 | 0,9 | 2,5 | 3,1 | 730 | 4,1 | 11,8 | | | |

Dosierung auf 1,35 mmol Peroxid/100 g Silikonkautschuk reduziert.

* erfindungsgemäß

Fortsetzung Tabelle 3

| Peroxid-Typ | Aktivsauerstoffgehalt % | Dosis Gew.% | Monsanto Rheometer 100S: ts Min. | tgo Min. | M Nm | Zugprüfung: Dehnung | Modul | Zugfestigkeit N/mm² | Härte °Shore A | Druckverformungsrest % | Rück- % |
|---|---|---|---|---|---|---|---|---|---|---|---|
| VII | 2,14 | 1,40 | 1,8 | 5,5 | 3,2 | 740 | 3,5 | 10,6 | 48 | 24 | 53 |
| VIII | 1,82 | 1,65 | 1,9 | 6,5 | 2,9 | 700 | 4,3 | 10,7 | 50 | 20 | 49 |
| IX | 3,06 | 1,0 | 1,7 | 4,1 | 3,5 | 500 | 5,9 | 8,8 | 48 | 25 | 43 |

Die Ergebnisse zeigen, daß bereits mit geringeren Mengen der erfindungsgemäß verwendeten Peroxide III und IV bessere Vernetzungsgrade (400 % Modul und Drehmoment M) erzielbar sind. Sie sind den bekannten Peroxid-Vernetzern für Silikonkautschuk (V/VI) in ihrer Vernetzungswirksamkeit gleichwertig. Die Peroxide I und II sind in ihrer Wirksamkeit molar dosiert unterlegen.

Außerdem besitzen die Peroxide III und IV gegenüber I, II und VI höhere Verarbeitungssicherheit (Scorchzeit $t_s$). Das in dieser Hinsicht gleichwertige V kann aber nicht für die drucklose Vulkanisation verwendet werden.

## Patentansprüche

1. Verfahren zur Vernetzung von Organopolysiloxanen mittels Bis-Benzoylperoxidderivaten unter Erhitzen, **dadurch gekennzeichnet,** daß man als Bis-Benzoylperoxidderivat wenigstens eine Verbindung der allgemeinen Formel I verwendet,

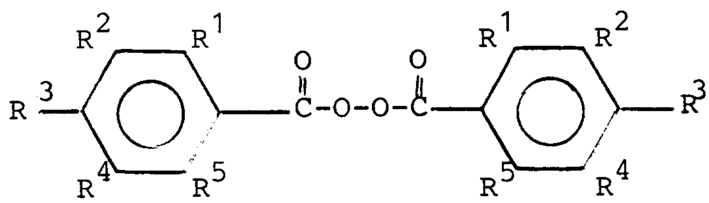

(I)

worin die Reste $R^1$, $R^2$, $R^3$, $R^4$ und $R^5$ jeweils unabhängig voneinander die folgende Bedeutung haben: $R^1$ und $R^5$ können gleich oder verschieden sein und bedeuten Alkoxycarbonyl mit 2 bis 4 C-Atomen in der Alkylgruppe, F oder H; $R^2$ und $R^4$ können gleich oder verschieden sein und bedeuten eine Alkylgruppe mit 2 bis 8 C-Atomen oder H, $R^3$ bedeutet eine Alkylgruppe mit 1 bis 8 C-Atomen oder H, wobei mindestens 2 Reste und höchstens 4 Reste pro Benzolring H bedeuten und drucklos bei einer Temperatur zwischen 100 und 600 °C in Gegenwart von Sauerstoff, insbesondere von Luft, vernetzt.

2. Verfahren nach Anspruch 1, **dadurch gekennzeichnet**, daß man bei einer Temperatur zwischen 150 und 350 °C vernetzt.

3. Verfahren nach einem der vorhergehenden Ansprüche, **dadurch gekennzeichnet,** daß man die Verbindung der allgemeinen Formel I in Silikonöl dispergiert dem zu vernetzenden Organopolysiloxan zumischt.

4. Verfahren nach Anspruch 3, **dadurch gekennzeichnet**, daß man die Verbindung der allgemeinen Formel I in einer Teilchengröße unter 50 µm dispergiert anwendet.

5. Verfahren nach Anspruch 3 oder 4, **dadurch gekennzeichnet,** daß man eine Silikonöldispersion verwendet, die 10 bis 80 Gew.-% an Verbindung der allgemeinen Formel I enthält.

6. Verfahren nach einem der vorhergehenden Ansprüche, **dadurch gekennzeichnet**, daß man eine Verbindung der allgemeinen Formel I verwendet, in der $R^3$ je eine Methyl-, Ethyl-, Propyl- oder Butylgruppe einschließlich von deren Isomeren, ist und $R^1$, $R^2$, $R^4$ und $R^5$ jeweils Wasserstoff bedeuten.

7. Verfahren nach einem der Ansprüche 1 bis 5, **dadurch gekennzeichnet,** daß die Reste $R^1$ jeweils eine Methoxycarbonyl- oder Ethoxycarbonylgruppe bedeuten und die Reste $R^2$, $R^3$, $R^4$ und $R^5$ jeweils Wasserstoff bedeuten.

8. Verfahren nach Anspruch 6, **dadurch gekennzeichnet**, daß man Bis-(4-methyl-benzoyl)-peroxid oder/und Bis-(4-tert.-butylbenzoyl)-peroxid verwendet.

9. Verfahren nach einem der vorhergehenden Ansprüche, **dadurch gekennzeichnet,** daß man 0,5 bis 5 mmol Verbindung der allgemeinen Formel I je 100 g Organopolysiloxan zusetzt.

10. Verwendung eines Mittels zur Durchführung des Verfahrens nach einem der Ansprüche 1 bis 9, wobei das Mittel im wesentlichen aus Silikonöl besteht, in dem 10 bis 80 Gew.-% an wenigstens einer Verbindung der allgemeinen Formel I

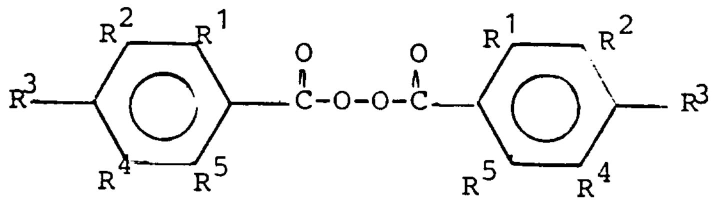

(I),

worin die Reste $R^1$, $R^2$, $R^3$, $R^4$ und $R^5$ jeweils unabhängig voneinander die folgende Bedeutung haben: $R^1$ und $R^5$ können gleich oder verschieden sein und bedeuten Alkoxycarbonyl mit 2 bis 4 C-Atomen in der Alkylgruppe, F oder H; $R^2$ und $R^4$ können gleich oder verschieden sein und bedeuten eine Alkylgruppe mit 1 bis 8 C-Atomen oder H; $R^3$ bedeutet eine Alkylgruppe mit 1 bis 8 C-Atomen oder H, wobei mindestens 2 Reste und höchstens 4 Reste pro Benzolring H bedeuten, in feinteiliger Form enthalten sind.

11. Verwendung nach Anspruch 10, im welcher die Verbindung der allgemeinen Formel I in einer Teilchengröße unter 50 µm, vorzugsweise von 1 bis 20 µm vorliegt.

## Claims

1. Process for cross-linking organosiloxanes by means of bis-benzoyl peroxide derivatives with heating, characterised in that, as bis-benzoyl peroxide derivative, one uses at least one compound of the general formula I

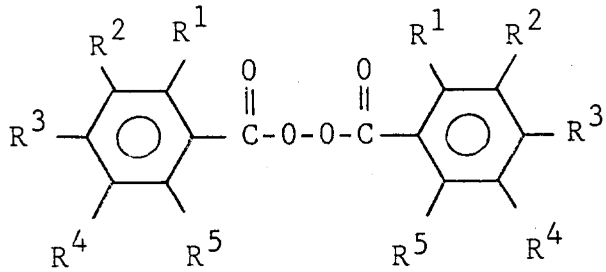

(I)

wherein the radicals $R^1$, $R^2$, $R^3$, $R^4$ and $R^5$, in each case independently of one another, have the following meanings: $R^1$ and $R^5$ can be the same or different and signify alkoxycarbonyl with 2 to 4 C-atoms in the alkyl group, F or H; $R^2$ and $R^4$ can be the same or different and signify an alkyl group with 2 to 8 C-atoms or H, $R^3$ signifies an alkyl group with 1 to 8 C-atoms or H, whereby at least 2 radicals and at most 4 radicals per benzene ring signify H and cross-links without pressure at a temperature between 100 and 600 °C in the presence of oxygen, especially of air.

2. Process according to claim 1, characterised in that one cross-links at a temperature between 150 and 350 °C.

3. Process according to one of the preceding claims, characterised in that one disperses the compound of the general formula I in silicone oil and admixes with the organosiloxane to be cross-linked.

4. Process according to claim 3, characterised in that one uses the compound of general formula I dispersed in a particle size below 50 µm.

5. Process according to claim 3 or 4, characterised in that one uses a silicone oil dispersion which contains 10 to 80 wt.% of compound of the general formula I.

6. Process according to one of the preceding claims, characterised in that one uses a compound of the general formula I in which each $R^3$ signifies a methyl, ethyl, propyl or butyl group, including their isomers, and $R^1$, $R^2$, $R^4$ and $R^5$ each signify hydrogen.

7. Process according to one of claims 1 to 5, characterised in that the radicals $R^1$ each signify a methoxycarbonyl or ethoxycarbonyl group and the radicals $R^2$, $R^3$, $R^4$ and $R^5$ each signify hydrogen.

8. Process according to claim 6, characterised in that one uses bis-(4-methylbenzoyl) peroxide and/or bis-(4-tert.-butylbenzoyl) peroxide.

9. Process according to one of the preceding claims, characterised in that one adds 0.5 to 5 mmol of compound of the general formula I per 100 g of organosiloxane.

10. Use of an agent for the carrying out of the process according to one of claims 1 to 9, whereby the agent essentially consists of silicone oil in which are contained, in finely divided form, 10 to 80 wt.% of at least one compound of the general formula I

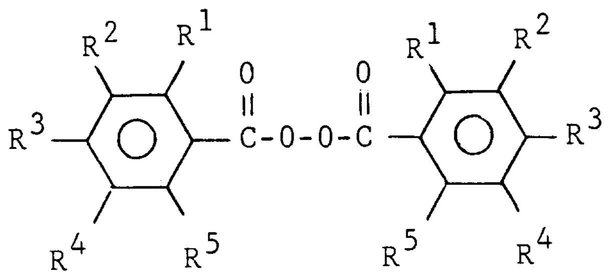

(I)

wherein the radicals $R^1$, $R^2$, $R^3$, $R^4$ and $R^5$, in each case independently of one another, have the following meanings: $R^1$ and $R^5$ can be the same or different and signify alkoxycarbonyl with 2 to 4 C-atoms in the alkyl group, F or H; $R^2$ and $R^4$ can be the same or different and signify an alkyl group with 1 to 8 C-atoms or H; $R^3$ signifies an alkyl group with 1 to 8 C-atoms or H, whereby at least 2 radicals and at most 4 radicals per benzene ring signify H.

11. Use according to claim 10, in which the compound of the general formula I is present in a particle size below 50 µm, preferably from 1 to 20 µm.

**Revendications**

1. Procédé de réticulation des organopolysiloxanes à l'aide de dérivés du peroxyde de benzoyle avec chauffage, caractérisé en ce que l'on utilise comme dérivé du peroxyde de benzoyle un composé de formule générale I

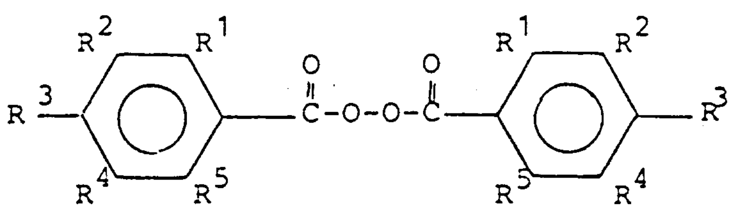

(I)

dans laquelle les restes $R^1$, $R^2$, $R^3$, $R^4$ et $R^5$ ont chacun indépendamment les uns des autres la signification suivante:
$R^1$ et $R^5$ peuvent être identiques ou différents et représentent un groupe alcoxycarbonyle de 2 à 4 atomes de carbone dans le groupe alkyle, F ou H;
$R^2$ et $R^4$ peuvent être identiques ou différents et représentent un groupe alkyle de 2 à 8 atomes de carbone ou H;
$R^3$ représente un groupe alkyle de 1 à 8 atomes de carbone ou H, au moins deux restes et au plus quatre restes par cycle benzénique représentant H, et l'on réticule sans pression à une température comprise entre 100 et 600 °C en présence d'oxygène, en particulier d'air.

**2.** Procédé selon la revendication 1, caractérisé en ce que l'on réticule à une température comprise entre 150 et 350 °C.

**3.** Procédé selon l'une des revendications précédentes, caractérisé en ce que l'on ajoute à l'organopolysiloxane à réticuler le composé de formule générale I dispersé dans l'huile de silicone.

**4.** Procédé selon la revendication 3, caractérisé en ce que l'on utilise le composé de formule générale I dispersé en une taille de particules inférieure à 50 µm.

**5.** Procédé selon la revendication 3 ou 4, caractérisé en ce que l'on utilise une dispersion d'huile de silicone qui contient 10 à 80% en poids de composé de formule générale I.

**6.** Procédé selon l'une des revendications précédentes, caractérisé en ce que l'on utilise un composé de formule générale I dans lequel $R^3$ est un groupe méthyle, éthyle, propyle ou butyle, y compris leurs isomères, et $R^1$, $R^2$, $R^4$ et $R^5$ représentent chacun l'hydrogène.

**7.** Procédé selon l'une des revendications 1 à 5, caractérisé en ce que les restes $R^1$ représentent chacun un groupe méthoxycarbonyle ou éthoxycarbonyle et les restes $R^2$, $R^3$, $R^4$ et $R^5$ représentent chacun l'hydrogène.

**8.** Procédé selon la revendication 6, caractérisé en ce que l'on utilise le peroxyde de 4-méthylbenzoyle et/ou le peroxyde de 4-tert.butylbenzoyle.

**9.** Procédé selon l'une des revendications précédentes, caractérisé en ce que l'on ajoute 0,5 à 5 mmoles de composé de formule générale I pour 100 g d'organopolysiloxane.

**10.** Utilisation d'un agent pour la mise en oeuvre du procédé selon l'une des revendications 1 à 9, l'agent consistant essentiellement en huile de silicone dans laquelle 10 à 80% en poids d'au moins un composé de formule générale I

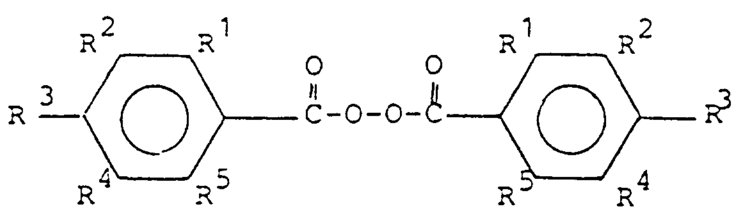 (I)

dans laquelle les restes $R^1$, $R^2$, $R^3$, $R^4$ et $R^5$ ont chacun indépendamment les uns des autres la signification suivante:
$R^1$ et $R^5$ peuvent être identiques ou différents et représentent un groupe alcoxycarbonyle de 2 à 4 atomes de carbone dans le groupe alkyle, F ou H;
$R^2$ et $R^4$ peuvent être identiques ou différents et représentent un groupe alkyle de 1 à 8 atomes de carbone ou H;
$R^3$ représente un groupe alkyle de 1 à 8 atomes de carbone ou H, au moins deux restes et au plus quatre restes par cycle benzénique représentant H, sont contenus sous forme finement divisée.

11. Utilisation selon la revendication 10, dans laquelle le composé de formule générale I est présent en une taille de particules inférieure à 50 µm, de préférence de 1 à 20 µm.